# EUROPÄISCHE PATENTSCHRIFT

(11) **EP 4 269 777 B1**
(45) Veröffentlichungstag und Bekanntmachung des Hinweises auf die Patenterteilung: **03.06.2026**
(21) Anmeldenummer: 23000062.2
(22) Anmeldetag: 17.04.2023
(51) Int. Cl.: F02M 21/02, F02M 61/14

(54) **ZYLINDERKOPF FÜR EINE BRENNKRAFTMASCHINE**
CYLINDER HEAD FOR AN INTERNAL COMBUSTION ENGINE
CULASSE POUR UN MOTEUR À COMBUSTION INTERNE

(30) Priorität: 26.04.2022 DE 102022001464
(43) Veröffentlichungstag der Anmeldung: 01.11.2023
(73) Patentinhaber: DEUTZ Aktiengesellschaft, 51149 Köln (DE)
(72) Erfinder: Klosterberg, Johannes, Köln (DE); Queren, Janine, Köln (DE); Bark, Klaus-Peter, Dürrholz (DE); Töpfer, Georg, Köln (DE); Hirmer, Manuel, Köln (DE); Nork, Benedikt, Köln (DE); Kleuser, Ralph, Köln (DE)

(56) Entgegenhaltungen:
- EP-A1- 0 915 248
- WO-A1-2012/084323
- DE-U1- 202008 013 696
- US-A1- 2014 021 272

## Beschreibung

Die vorliegende Erfindung betrifft einen Zylinderkopf für eine Brennkraftmaschine, insbesondere für eine wasserstoffbetriebene Brennkraftmaschine.

Zylinderköpfe schließen den Verbrennungsraum von Brennkraftmaschinen an einem dem Kolben gegenüberliegenden Ende ab. Die Zylinderköpfe umfassen dabei die Einlasskanäle, auch Saugkanäle genannt, und die Auslasskanäle für die Gaswechselvorgänge im Verbrennungsraum der Brennkraftmaschine. Die Gemischbildung von Kraftstoff und Ansaugluft kann dabei grundsätzlich im Saugrohr oder im Zylinder erfolgen. In beiden Fällen erfolgt das Einspritzen des Kraftstoffes über Injektoren, die von dem Zylinderkopf getragen werden.

Aus der US 2014/021272 A1 ist eine Zylinderkopfanordnung bekannt, die einen Injektor aufweist, der ist über eine Einspritzröhrchen direkt fluidisch mit einem Einlasskanal des Zylinderkopfes verbunden ist.

Aus der EP 0 915 248 A1 ist eine Zylinderkopfanordnung bekannt. Der Auslass eines Injektors und ein Einlasskanal des Zylinderkopfes sind über ein Einspritzrohr unmittelbar fluidisch verbunden.

Aus der WO 2015 067 550 A1 ist ein Zylinderkopf mit einem brennraumseitigen Feuerdeck und mit einer mit dem Zylinderkopf lösbar verbundenen Injektorhülse zur Aufnahme einer Einspritzeinrichtung bekannt. Die Injektorhülse ist an einem feuerdeckseitigen ersten Ende über eine erste Schraubverbindung mit dem Feuerdeck verschraubt und weist im Bereich des ersten Endes zumindest einen radial vorspringen den ersten Auflagebereich mit einer dem Feuerdeck zugewandten ersten Auflagefläche auf, welche auf einer durch den Zylinderkopf gebildeten ersten Gegenfläche aufliegt.

Aus der DE 11 2017 001 678 T5 ist ein Zylinderkopf, der eine Kraftstoffeinspritzvorrichtung mit einer Einspritzöffnung aufweist, bekannt. Der Zylinderkopf umfasst ein Montageloch, in das eine hülsenförmige Kunststoffkappe eingesetzt ist, sodass sich ein Durchgangsloch, durch das sich die Kraftstoffeinspritzvorrichtung erstreckt, in den Brennraum einer Brennkraftmaschine öffnet.

Hiervon ausgehend liegt der vorliegenden Erfindung die Aufgabe zugrunde, einen Zylinderkopf für eine Brennkraftmaschine bereitzustellen, der einfach herzustellen und zu montieren ist.

Die zugrunde liegende Aufgabe wird durch einen Zylinderkopf für eine Brennkraftmaschine, insbesondere für eine wasserstoffbetriebene Brennkraftmaschine, gelöst, wobei der Zylinderkopf folgendes umfasst: eine Zylinderkopfanordnung, die einen Saugkanal und einen Kraftstoffeinlassdurchbruch aufweist, wobei sich der Kraftstoffeinlassdurchbruch in den Saugkanal öffnet, einen Injektorhalter, der mit der Zylinderkopfanordnung lösbar verbunden ist und eine Injektoraufnahmebohrung aufweist, einen Injektor, der in der Injektoraufnahmebohrung aufgenommen ist und mittels Spannmitteln gegenüber dem Injektorhalter verspannt ist, und ein röhrenförmiges Steckstück, das so zwischen dem Injektorhalter und der Zylinderkopfanordnung angeordnet ist, dass eine Abgabeöffnung des Injektors und der Kraftstoffeinlassdurchbruch der Zylinderkopfanordnung über das Steckstück fluidisch miteinander verbunden sind.

Der erfindungsgemäße Zylinderkopf weist den Vorteil auf, dass der Injektor in dem Injektorhalter vormontiert werden kann. Darüber hinaus können die Anforderungen an die Bearbeitungstoleranzen der Anschlussmaße zwischen der Zylinderkopfanordnung und dem Injektorhalter gering gehalten werden, da diese über das röhrenförmige Steckstück ausgeglichen werden können. Der erfindungsgemäße Zylinderkopf ist somit einfach herzustellen und sichert eine leichte Montage.

In einer möglichen Ausführungsform des Zylinderkopfes kann der Injektorhalter einen Kraftstoffübergabedurchbruch aufweisen, wobei die Injektoraufnahmebohrung in den Kraftstoffübergabedurchbruch mündet. Dabei kann das röhrenförmige Steckstück so zwischen dem Injektorhalter und der Zylinderkopfanordnung angeordnet sein, dass die Abgabeöffnung des Injektors und der Kraftstoffeinlassdurchbruch der Zylinderkopfanordnung über den Kraftstoffübergabedurchbruch und das Steckstück fluidisch miteinander verbunden sind.

In einer weiteren möglichen Ausführungsform kann ein röhrenförmiges Federelement vorgesehen sein, das so zwischen dem Injektorhalter und dem Steckstück angeordnet ist, dass das Steckstück an dem Injektorhalter in axialer Richtung bezüglich einer Längsachse des Steckstücks federnd abgestützt ist. Dabei kann das Steckstück an einem ersten Ende mit der Zylinderkopfanordnung und an einem gegenüberliegenden zweiten Ende mit dem röhrenförmigen Federelement in Anlage sein. Durch das Federelement kann eine weitere Reduzierung der Anforderungen an die Bearbeitungstoleranzen der Anschlussmaße zwischen der Zylinderkopfanordnung und dem Injektorhalter realisiert werden. Darüber hinaus kann durch das Federelement eine axiale Verschiebung des Steckstücks durch Druckschwankungen verhindert werden.

Alternativ oder in Kombination kann ein röhrenförmiges Federelement vorgesehen sein, das zwischen dem Steckstück und der Zylinderkopfanordnung angeordnet ist, sodass das Steckstück an dem Injektorhalter federnd abgestützt ist. Dabei kann das Steckstück an einem ersten Ende mit dem Injektorhalter und an einem gegenüberliegenden zweiten Ende mit dem röhrenförmigen Federelement in Anlage sein.

In einer ebenfalls möglichen Ausführungsform kann der Injektorhalter eine Steckstückaufnahme aufweisen, in der das Steckstück einsitzt. Alternativ oder in Kombination kann die Zylinderkopfanordnung eine Steckstückaufnahme aufweisen, in der das Steckstück einsitzt.

In einer weiteren möglichen Ausführungsform kann der Injektorhalter einen Druckspeicher umfassen, der mit einer Kraftstoffquelle fluidisch verbindbar und mit dem Injektor fluidisch verbunden ist.

Es ist zudem auch möglich, dass der Injektorhalter mehrere Injektoraufnahmebohrungen umfasst, in denen jeweils ein Injektor aufgenommen ist. Alternativ oder in Kombination kann der Injektorhalter einen Druckspeicher umfassen, der mit einer Kraftstoffquelle fluidisch verbindbar und mit den Injektoren jeweils fluidisch verbunden ist. Dabei kann sich der Druckspeicher als zylindrische Pufferbohrung durch den Injektorhalter hindurch erstrecken. Die Pufferbohrung kann dabei in den Injektorhalter eingegossen sein oder nachträglich durch mechanische Bearbeitung in den Injektorhalter eingebracht sein.

Die Pufferbohrung kann an zumindest einem Ende mit einem Verschlusselement verschlossen sein. Ist die zylindrische Pufferbohrung als Sacklochbohrung ausgestaltet, so kann die Pufferbohrung an einem ersten Ende mit einem ersten Verschlusselement verschlossen sein und an einem zweiten Ende durch den Sacklochboden. Ist die zylindrische Pufferbohrung als Durchgangsbohrung ausgestaltet, so kann die Pufferbohrung an einem ersten Ende mit einem ersten Verschlusselement verschlossen sein und an einem zweiten Ende mit einem zweiten Verschlusselement.

Die Seele der Pufferbohrung kann quer, insbesondere windschief, jeweils zu einer Längsachse der Injektoraufnahmebohrungen angeordnet sein. Dabei ist es denkbar, dass in einer Projektion die Seele der Pufferbohrung und die jeweiligen Längsachsen der Injektoraufnahmebohrungen einen Winkel von 90° einschließen.

In einer möglichen Ausführungsform kann sich der Kraftstoffeinlassdurchbruch über ein röhrenförmiges Einspritzröhrchen in den Saugkanal öffnen. Dabei kann das Einspritzröhrchen mit der Zylinderkopfanordnung verbunden sein, insbesondere durch Einschrauben, Einkleben oder Einpressen.

Zudem kann die Zylinderkopfanordnung ein Grundelement und ein Saugrohr umfassen, wobei der Saugkanal zumindest teilweise von Grundelement und Saugrohr gebildet werden.

Nachfolgend wird ein Ausführungsbeispiel anhand der Figuren erläutert. Hierin zeigt:
- Figur 1: eine perspektivische Ansicht eines erfindungsgemäßen Zylinderkopfes für eine 6-Zylinder-Brennkraftmaschine,
- Figur 2: einen Ausschnitt einer Seitenansicht des Zylinderkopfes aus Figur 1,
- Figur 3: eine Schnittansicht des Zylinderkopfes aus Figur 1 entlang der Schnittebene III-III in Figur 2, und
- Figur 4: eine Detailansicht der Figur 3.

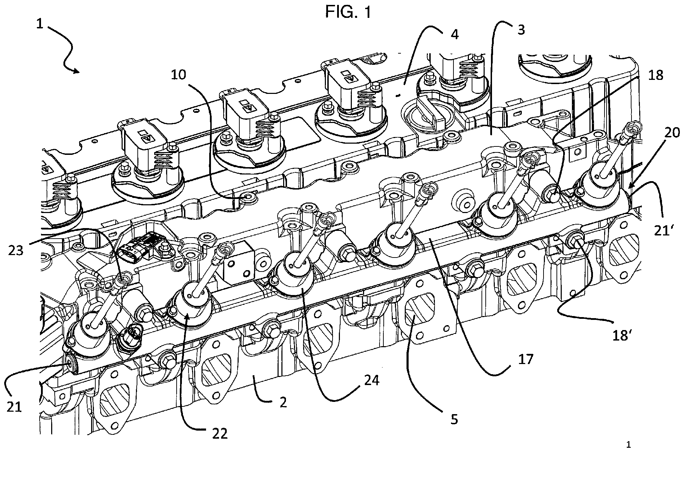

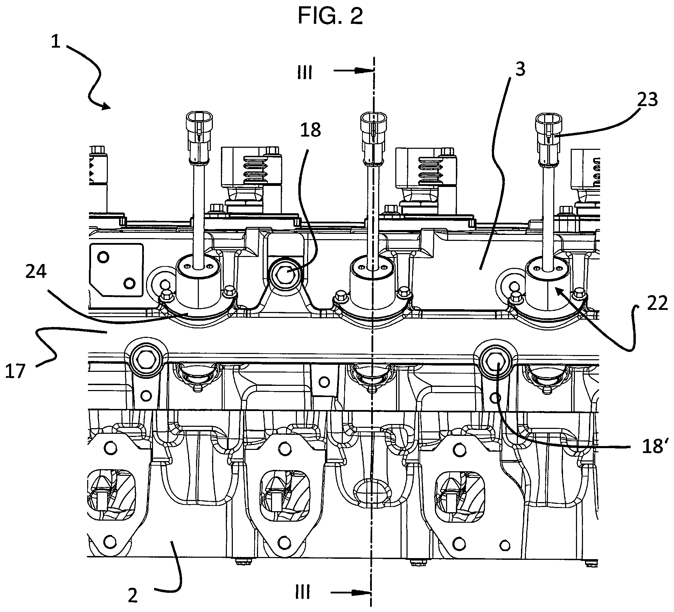

In den Figuren 1 bis 4, die nachfolgend gemeinsam beschrieben werden, ist ein erfindungsgemäßer Zylinderkopf für eine 6-Zylinder-Brennkraftmaschine gezeigt. Der Zylinderkopf umfasst eine Zylinderkopfanordnung 1 mit einem Grundelement 2, einem Saugrohr 3 und einer Ventiltriebabdeckung 4.

Das Grundelement 2 weist ein Flammendeck 6 auf, durch das eine nicht dargestellte Brennkammer der Brennkraftmaschine abgeschlossen werden kann. Das Grundelement 2 ist aus einem Gusswerkstoff hergestellt. Ein Einlasskanal 7 ist in dem Grundelement 2 angeordnet, insbesondere eingegossen. Der Einlasskanal 7 durchdringt das Flammendeck 6. Der so in dem Flammendeck 6 gebildete Brennkammereinlass 8 kann in der dem Fachmann bekannten Art durch eine Einlassventilanordnung 9 wahlweise verschlossen oder geöffnet werden. Ein Auslasskanal 5 ist in dem Grundelement 2 angeordnet, insbesondere eingegossen. Der Auslasskanal 5 durchdringt das Flammendeck 6. Der so in dem Flammendeck 6 gebildete Brennkammerauslass 5 kann in der dem Fachmann bekannten Art durch eine Auslassventilanordnung wahlweise verschlossen oder geöffnet werden.

Das Saugrohr 3 ist über Verbindungsmittel 10 mit dem Grundelement 2 verbunden. Das Saugrohr 3 umfasst ebenfalls einen Einlasskanal 11, der zusammen mit dem Einlasskanal 7 des Grundelements 2 einen Saugkanal 12 bildet. Der Saugkanal 12 verbindet den Brennkammereinlass 8 mit einer Ansaugluftquelle fluidisch, beispielsweise mit einem Filterelement, einem Kompressor oder mit einem Turbolader. Insofern können das Grundelement 2 und das Saugrohr 3 als Teil der Zylinderkopfanordnung bezeichnet werden.

Die Zylinderkopfanordnung 1 weist einen Kraftstoffeinlassdurchbruch 13 auf. Im vorliegenden Fall weist das Saugrohr 3 den Kraftstoffeinlassdurchbruch 13 auf, wobei es genauso denkbar ist, dass der Kraftstoffeinlassdurchbruch 13 in dem Grundelement 2 ausgebildet ist.

Der Kraftstoffeinlassdurchbruch 13 öffnet sich über ein Einspritzröhrchen 14 in den Saugkanal 12. Im vorliegenden Fall ist das Einspritzröhrchen 14 in ein in den Kraftstoffeinlassdurchbruch 13 integriertes Innengewinde eingeschraubt. Es ist aber auch jede weitere lösbare bzw. unlösbare Verbindung denkbar, wobei das Einspritzröhrchen 14 beispielweise mit der Zylinderkopfanordnung 1 verklebt sein kann oder in den Kraftstoffeinlassdurchbruch 13 eingepresst sein kann. Zwischen dem Einspritzröhrchen 14 und der Zylinderkopfanordnung 1 sind nicht dargestellte Dichtmittel vorgesehen. Alternativ kann durch die Verbindung zwischen Einspritzröhrchen 14 und Zylinderkopfanordnung 1 eine metallische Dichtpressung vorliegen.

Das Einspritzröhrchen 14 umfasst einen geraden Kanal 15, der den Kraftstoffeinlassdurchbruch 13 mit einer Auslassöffnung 16 des Einspritzröhrchens 14 fluidisch verbindet. Der Kanal 15 erstreckt sich entlang einer Längsachse des Einspritzröhrchens 14. Hierdurch erfolgt der Eintritt von über den Kraftstoffeinlassdurchbruch 13 eingebrachtem Kraftstoff näher an dem Brennkammereinlass 8, was zu einer vorteilhaften Gemischbildung sowie Kühlung des Grundelementes 2 im Bereich des Brennkammereinlasses 8 führt. Grundsätzliches ist es dabei auch denkbar, dass das Einspritzröhrchen 14 eine von gerade abweichende Form aufweist und insbesondere gebogen oder S-förmig ist.

An der Zylinderkopfanordnung 1 ist ein Injektorhalter 17 lösbar befestigt. Im vorliegenden Fall ist der Injektorhalter 17 über Verbindungsmittel 18, 18' mit dem Saugrohr 3 verschraubt. Grundsätzlich ist es dabei auch denkbar, dass der Injektorhalter 17 über die Verbindungsmittel 18 mit dem Saugrohr 3 und über die Verbindungsmittel 18' mit dem Grundelement 2 verschraubt ist. Ferner ist es dabei denkbar, dass der Injektorhalter 17 mit zumindest einem von dem Grundelement 2, dem Saugrohr 3, der Ventiltriebabdeckung 4 und dem Auslassrohr 5 über Verbindungsmittel lösbar verbunden ist.

Der Injektorhalter 17 umfasst mehrere Injektoraufnahmebohrungen 19. Im vorliegenden Fall umfasst der Injektorhalter 17 entsprechend der Zylinderzahl der Brennkraftmaschine sechs Injektoraufnahmebohrungen 19, ohne darauf beschränkt zu sein. In den Injektoraufnahmebohrungen 19 sind jeweils Injektoren 22 aufgenommen. Die Injektoren 22 sind über Spannmittel 24 mit dem Injektorhalter 17 verspannt. Die Spannmittel 24 sind im vorliegenden Fall als Spannpratzen ausgeführt. Die Injektoren 22 weisen einen elektrischen Anschluss 23 auf, über den die Injektoren 22 mit einer (nicht dargestellten) Steuereinheit verbunden werden können. Über die Steuereinheit können die Injektoren 22 angesteuert werden.

Die Injektoraufnahmebohrungen 19 sind über eine Pufferbohrung 20 fluidisch miteinander verbunden. Die Pufferbohrung 20 dient dabei als gemeinsamer Druckspeicher für die Injektoraufnahmebohrungen 19. Die Pufferbohrung 20 ist im vorliegenden Fall als Durchgangsbohrung ausgeführt. An den gegenüberliegenden Enden der Pufferbohrung 20 ist diese jeweils mit einem Verschlusselement 21, 21' abdichtend verschlossen. Die Pufferbohrung 20 ist über in den Figuren nicht sichtbare Leitungen mit einer Kraftstoffquelle, beispielsweise einer Kraftstoffpumpe, fluidisch verbindbar und kann von dieser mit Druck beaufschlagt werden. Es ist dabei denkbar, dass an Stelle eines der Verschlusselemente 21, 21' ein Anschluss an die Leitung zur Kraftstoffquelle vorgesehen ist.

Die Seele der Pufferbohrung 20 ist windschief zu den jeweiligen Längsachsen der Injektoraufnahmebohrungen 19 angeordnet, wobei in einer Projektion die Seele der Pufferbohrung 20 und die jeweiligen Längsachsen der Injektoraufnahmebohrungen 19 einen Winkel von 90° einschließen. Der Versatz zwischen der Seele der Pufferbohrung 20 und den jeweiligen Längsachsen der Injektoraufnahmebohrungen 19 ist größer als der Radius der Pufferbohrung 20. Die Pufferbohrung 20 schneidet die Injektoraufnahmebohrungen 19 mit einem Teilabschnitt.

Die einzelnen Injektoren 22 sind jeweils gegenüber den entsprechenden Injektoraufnahmebohrungen 19 mit zwei Dichtelementen 25, 25' abgedichtet. Die zwei Dichtelemente 25, 25' sind dabei so angeordnet, dass zwischen einer Innenwand 26 der Injektoraufnahmebohrung 19 und dem Injektor 22 ein abgedichteter Raum 27 gebildet ist, der mit der Pufferbohrung 20 fluidisch verbunden ist. Im vorliegenden Fall ist der abgedichtete Raum 27 als ein den Injektor 22 umgebender Ringraum ausgebildet. Der Ringraum schneidet dabei die Pufferbohrung 20. Der Ringraum geht somit in die Pufferbohrung 20 über, sodass eine fluidische Verbindung hergestellt ist.

Als Injektoren 22 können marktübliche Injektoren verwendet werden. Die Injektoren 22 weisen im vorliegenden Fall einen schematisch dargestellten Zulauf 28 auf, der sich in den abgedichteten Raum 27 und/oder die Pufferbohrung 20 öffnet. Die Injektoren 22 umfassen zudem eine Abgabeöffnung 29, die auch als Abspritzöffnung bezeichnet werden kann und über die die Injektoren 22 Kraftstoff abgeben können. Die Abgabe des Kraftstoffes über die Abgabeöffnung 29 erfolgt dabei in Richtung eines Kraftstoffübergabedurchbruchs 30 des Injektorhalters 17. Der Kraftstoffübergabedurchbruch 30 des Injektorhalters 17 schließt dabei an die Injektoraufnahmebohrung 19 an. Mit anderen Worten mündet die Injektoraufnahmebohrung 19 in dem Kraftstoffübergabedurchbruch 30 des Injektorhalters 17. Der Kraftstoffübergabedurchbruch 30 weist dabei im vorliegenden Fall einen kreisförmigen Querschnitt mit konstantem Durchmesser auf, ohne darauf beschränkt zu sein. Grundsätzlich ist aber auch denkbar, dass die Abgabeöffnung 29 der Injektoren 22 zumindest teilweise innerhalb des Kraftstoffübergabedurchbruchs 30 angeordnet ist.

Der Kraftstoffübergabedurchbruch 30 ist über ein Steckstück 32 fluidisch mit dem Kraftstoffeinlassdurchbruch 13 verbunden. Hierzu sitzt das Steckstück 32 mit einem ersten Ende 34 in einer Steckstückaufnahme 42 der Zylinderkopfanordnung 1, die im vorliegenden Fall als zylindrische Bohrung ausgeführt ist, ein. Das erste Ende 34 des Steckstücks 32 ist dabei kopfseitig in Anlage mit der Zylinderkopfanordnung 1. Im vorliegenden Fall ist das erste Ende 34 des Steckstücks 32 kopfseitig in Anlage mit dem Saugrohr 3. Zwischen dem ersten Ende 34 des Steckstücks 32 und einer Innenwand 43 der Steckstückaufnahme 42 ist ein Dichtelement 39 vorgesehen. Das Dichtelement 39 ist vorliegend als O-Ring ausgeführt. Es ist allerdings auch denkbar, dass das Dichtelement 39 als eine oder mehrere auf dem Steckstück 32 aufvulkanisierte Dichtlippen realisiert ist.

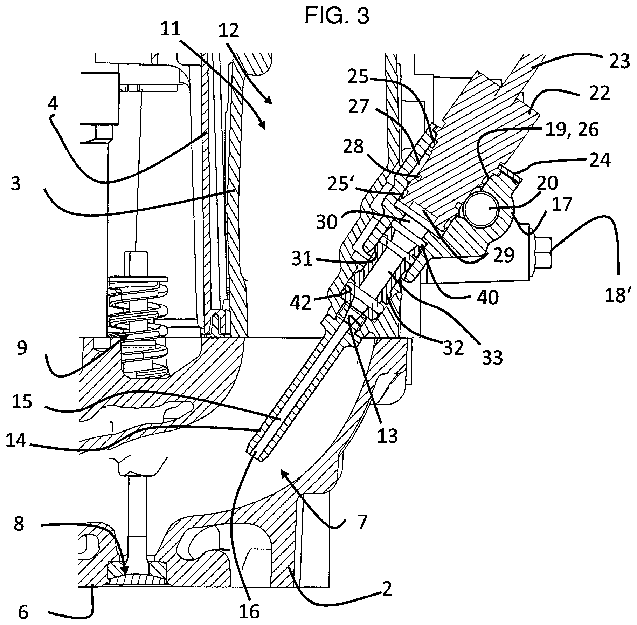

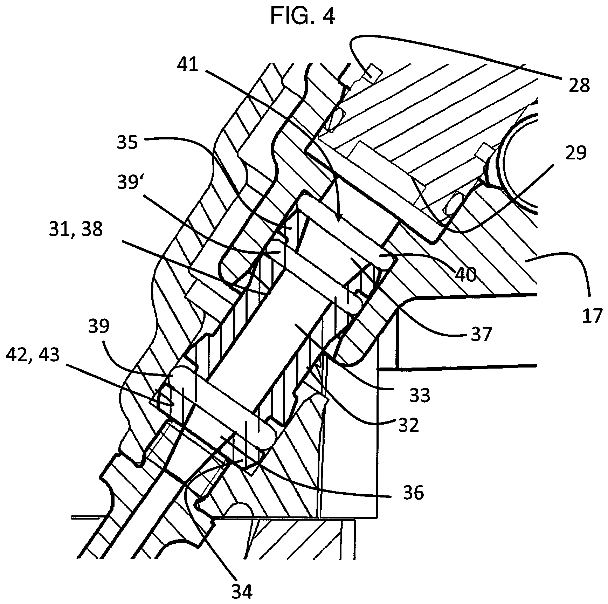

Mit einem zweiten Ende 35 sitzt das Steckstück 32 in einer Steckstückaufnahme 31 des Injektorhalters 17 ein, die im vorliegenden Fall als zylindrische Bohrung ausgeführt ist. Das zweite Ende 35 des Steckstücks 32 ist kopfseitig in Anlage mit einem Federelement 40. Das Federelement 40 ist zwischen dem Steckstück 32 und dem Injektorhalter 17 angeordnet. Das Federelement 40 ist dabei beispielsweise röhrenförmigen oder ringförmig ausgeführt. Das Federelement 40 umfasst dementsprechend einen Durchbruch, der insbesondere einen kreisförmigen Querschnitt mit konstantem Durchmesser aufweist. Das Federelement 40 kann aus einem metallischen Werkstoff oder einem Kunststoff hergestellt sein. Zwischen dem zweiten Ende 35 des Steckstücks 32 und einer Innenwand 38 der Steckstückaufnahme 31 ist ein Dichtelement 39' vorgesehen. Das Dichtelement 39' ist vorliegend als O-Ring ausgeführt. Es ist allerdings auch denkbar, dass das Dichtelement 39' als eine oder mehrere auf dem Steckstück 32 aufvulkanisierte Dichtlippen realisiert ist. In diesem Kontext wird darauf hingewiesen, dass in den Figuren 3 und 4 die Dichtelement 39, 39' und das Federelement 40 nicht geschnitten dargestellt sind.

Das Steckstück 32 umfasst einen Kanal 33, der den Kraftstoffeinlassdurchbruch 13 mit dem Kraftstoffübergabedurchbruch 30 über das Federelement 40 fluidisch verbindet. Der Kanal 33 umfasst dabei an einem ersten Ende einen ersten konischen Endabschnitt 36 und an einem zweiten gegenüberliegenden Ende einen zweiten konischen Endabschnitt 37. Der erste konische Endabschnitt 36 und der zweite konischen Endabschnitt 37 sind über einen zylindrischen Abschnitt miteinander verbunden.

Der erste konische Endabschnitt 36 verengt sich in Richtung einer Öffnung, die in Richtung des Kraftstoffeinlassdurchbruchs 13 gerichtet ist, und weitet sich in Richtung des zylindrischen Abschnitts des Kanals 33. Die Öffnung des ersten konischen Endabschnitts 36 und der Kraftstoffeinlassdurchbruch 13 schließen unmittelbar aneinander an. Der Querschnitt der Öffnung des ersten konischen Endabschnitts 36 entspricht dem Querschnitt des Kraftstoffeinlassdurchbruchs 13.

Der zweite konische Endabschnitt 37 weitet sich in Richtung einer Öffnung, die in Richtung des röhrenförmigen Federelements 40 gerichtet ist, und verengt sich in Richtung des zylindrischen Abschnitts des Kanals 33. Hierbei entspricht der Querschnitt der Öffnung des zweiten konischen Endabschnitts 37 dem Querschnitt des Kraftstoffübergabedurchbruchs 30 und/ oder dem Querschnitt des Durchbruchs des Federelements 40. Im vorliegenden Fall weisen der Kraftstoffübergabedurchbruch 30 und der Durchbruch des Federelements 40 jeweils den gleichen Durchmesser auf.

Der Kraftstoffübergabedurchbruch 30, der Durchbruch des Federelements 40 und der Kanal 33 des Steckstücks 32 bilden somit einen Verbindungskanal 41, der die Abgabeöffnung 29 des Injektors 22 mit dem Kraftstoffeinlassdurchbruch 13 fluidisch verbindet.

Das erster Ende 34 des Steckstücks 32 und das zweite Ende 35 des Steckstücks 32 weisen unterschiedliche Durchmesser auf, sodass eine definierte Einbaulage nach dem Schlüssel-Schloss-Prinzip realisiert ist. Das Steckstück 32 kann daher nur so zwischen dem Injektorhalter 17 und der Zylinderkopfanordnung 1 eingesetzt werden, dass der Kanal 33 wie zuvor beschrieben ausgerichtet ist.

### Bezugszeichenliste

- 1: Zylinderkopfanordnung
- 2: Grundelement
- 3: Saugrohr
- 4: Ventiltriebabdeckung
- 5: Auslassrohr
- 6: Flammendeck
- 7: Einlasskanal
- 8: Brennkammereinlass
- 9: Einlassventilanordnung
- 10: Verbindungsmittel
- 11: Einlasskanal
- 12: Saugkanal
- 13: Kraftstoffeinlassdurchbruch
- 14: Einspritzröhrchen
- 15: Kanal
- 16: Auslassöffnung
- 17: Injektorhalter
- 18 , 18': Verbindungsmittel
- 19: Injektoraufnahmebohrung
- 20: Pufferbohrung
- 21 , 21': Verschlusselement
- 22: Injektor
- 23: Anschluss
- 24: Spannmittel
- 25 , 25': Dichtelement
- 26: Innenwand
- 27: Raum
- 28: Zulauf
- 29: Abgabeöffnung
- 30: Kraftstoffübergabedurchbruch
- 31: Steckstückaufnahme
- 32: Steckstück
- 33: Kanal
- 34: Ende
- 35: Ende
- 36: konischer Endabschnitt
- 37: konischer Endabschnitt
- 38: Innenwand
- 39 , 39': Dichtelement
- 40: Federelement
- 41: Verbindungskanal
- 42: Steckstückaufnahme
- 43: Innenwand

## Patentansprüche

1. Zylinderkopf für eine Brennkraftmaschine, insbesondere für eine wasserstoffbetriebene Brennkraftmaschine, umfassend:
eine Zylinderkopfanordnung, die einen Saugkanal (12) und einen Kraftstoffeinlassdurchbruch (13) aufweist, wobei sich der Kraftstoffeinlassdurchbruch (13) in den Saugkanal (12) öffnet,
einen Injektorhalter (17), der mit der Zylinderkopfanordnung lösbar verbunden ist und eine Injektoraufnahmebohrung (19) aufweist,
einen Injektor (22), der in der Injektoraufnahmebohrung (19) aufgenommen ist und mittels Spannmitteln (24) gegenüber dem Injektorhalter (17) verspannt ist,
**gekennzeichnet durch,**
ein röhrenförmiges Steckstück (32), das so zwischen dem Injektorhalter (17) und der Zylinderkopfanordnung angeordnet ist, dass eine Abgabeöffnung (29) des Injektors (22) und der Kraftstoffeinlassdurchbruch (13) der Zylinderkopfanordnung über das Steckstück (32) fluidisch miteinander verbunden sind.

2. Zylinderkopf nach Anspruch 1,
**dadurch gekennzeichnet, dass** der Injektorhalter (17) einen Kraftstoffübergabedurchbruch (30) aufweist, wobei die Injektoraufnahmebohrung (19) in den Kraftstoffübergabedurchbruch (30) mündet.

3. Zylinderkopf nach Anspruch 2,
**dadurch gekennzeichnet, dass** das röhrenförmige Steckstück (32) so zwischen dem Injektorhalter (17) und der Zylinderkopfanordnung angeordnet ist, dass die Abgabeöffnung (29) des Injektors (22) und der Kraftstoffeinlassdurchbruch (13) der Zylinderkopfanordnung über den Kraftstoffübergabedurchbruch (30) und das Steckstück (32) fluidisch miteinander verbunden sind.

4. Zylinderkopf nach einem der Ansprüche 1 bis 3,
**dadurch gekennzeichnet, dass** ein röhrenförmiges Federelement (40) vorgesehen ist, das so zwischen dem Injektorhalter (17) und dem Steckstück (32) angeordnet ist, dass das Steckstück (32) an dem Injektorhalter (17) in axialer Richtung bezüglich einer Längsachse des Steckstücks (32) federnd abgestützt ist.

5. Zylinderkopf nach Anspruch 4,
**dadurch gekennzeichnet, dass** das Steckstück (32) an einem ersten Ende (34) mit der Zylinderkopfanordnung und an einem gegenüberliegenden zweiten Ende (35) mit dem röhrenförmigen Federelement (40) in Anlage ist.

6. Zylinderkopf nach einem der Ansprüche 1 bis 3,
**dadurch gekennzeichnet, dass** ein röhrenförmiges Federelement (40) vorgesehen ist, das zwischen dem Steckstück (32) und der Zylinderkopfanordnung angeordnet ist, sodass das Steckstück (32) in axialer Richtung bezüglich einer Längsachse des Steckstücks (32) an dem Injektorhalter (17) federnd abgestützt ist.

7. Zylinderkopf nach Anspruch 6,
**dadurch gekennzeichnet, dass** das Steckstück (32) an einem ersten Ende mit dem Injektorhalter (17) und an einem gegenüberliegenden zweiten Ende mit dem röhrenförmigen Federelement (40) in Anlage ist.

8. Zylinderkopf nach einem der Ansprüche 1 bis 7,
**dadurch gekennzeichnet, dass** der Injektorhalter (17) eine Steckstückaufnahme (31) aufweist, in der das Steckstück (32) einsitzt.

9. Zylinderkopf nach einem der Ansprüche 1 bis 8,
**dadurch gekennzeichnet, dass** die Zylinderkopfanordnung eine Steckstückaufnahme (42) aufweist, in der das Steckstück (32) einsitzt.

10. Zylinderkopf nach einem der Ansprüche 1 bis 9,
**dadurch gekennzeichnet, dass** der Injektorhalter (17) einen Druckspeicher (20) umfasst, der mit einer Kraftstoffquelle fluidisch verbindbar und mit dem Injektor (22) fluidisch verbunden ist.

11. Zylinderkopf nach einem der Ansprüche 1 bis 9,
**dadurch gekennzeichnet,**
**dass** der Injektorhalter (17) mehrere Injektoraufnahmebohrungen (19) umfasst, in denen jeweils ein Injektor (22) aufgenommen ist, und
**dass** der Injektorhalter (17) einen Druckspeicher (20) umfasst, der mit einer Kraftstoffquelle fluidisch verbindbar und mit den Injektoren jeweils fluidisch verbunden ist.

12. Zylinderkopf nach Anspruch 11,
**dadurch gekennzeichnet, dass** sich der Druckspeicher (20) als zylindrische Pufferbohrung (20) durch den Injektorhalter (17) hindurch erstreckt, wobei insbesondere die Pufferbohrung (20) an zumindest einem Ende mit einem Verschlusselement (21, 21') verschlossen ist.

13. Zylinderkopf nach einem der Ansprüche 1 bis 12,
**dadurch gekennzeichnet, dass** sich der Kraftstoffeinlassdurchbruch (13) über ein röhrenförmiges Einspritzröhrchen (14) in den Saugkanal (12) öffnet.

14. Zylinderkopf nach Anspruch 13,
**dadurch gekennzeichnet, dass** das Einspritzröhrchen (14) mit der Zylinderkopfanordnung verbunden ist, insbesondere durch Einschrauben, Einkleben oder Einpressen.

15. Zylinderkopf nach einem der Ansprüche 1 bis 15,
**dadurch gekennzeichnet, dass** die Zylinderkopfanordnung ein Grundelement (2) und ein Saugrohr (3) umfasst, wobei der Saugkanal (12) zumindest teilweise von Grundelement (2) und Saugrohr (3) gebildet werden.

## Claims

1. Cylinder head for an internal combustion engine, in particular for a hydrogen-powered internal combustion engine, comprising:
a cylinder head assembly which comprises a suction duct (12) and a fuel inlet aperture (13), wherein the fuel inlet aperture (13) opens into the suction duct (12),
an injector holder (17) which is detachably connected to the cylinder head assembly and has an injector receiving bore (19),
an injector (22) which is received in the injector receiving bore (19) and is braced with respect to the injector holder (17) by means of clamping means (24),
**characterized by**
a tubular plug-in piece (32) which is arranged between the injector holder (17) and the cylinder head assembly in such a way that a discharge opening (29) of the injector (22) and the fuel inlet aperture (13) of the cylinder head assembly are fluidically connected to each other via the plug-in piece (32).

2. Cylinder head according to Claim 1,
**characterized in that** the injector holder (17) has a fuel transfer aperture (30), wherein the injector receiving bore (19) opens into the fuel transfer aperture (30).

3. Cylinder head according to Claim 2,
**characterized in that** the tubular plug-in piece (32) is arranged between the injector holder (17) and the cylinder head assembly in such a way that the discharge opening (29) of the injector (22) and the fuel inlet aperture (13) of the cylinder head assembly are fluidically connected to each other via the fuel transfer aperture (30) and the plug-in piece (32).

4. Cylinder head according to one of Claims 1 to 3,
**characterized in that** a tubular spring element (40) is provided, which is arranged between the injector holder (17) and the plug-in piece (32) in such a way that the plug-in piece (32) is supported on the injector holder (17) resiliently in the axial direction with regard to a longitudinal axis of the plug-in piece (32).

5. Cylinder head according to Claim 4,
**characterized in that** the plug-in piece (32) is in contact at a first end (34) with the cylinder head assembly and at an opposite second end (35) with the tubular spring element (40).

6. Cylinder head according to one of Claims 1 to 3,
**characterized in that** a tubular spring element (40) is provided, which is arranged between the plug-in piece (32) and the cylinder head assembly, such that the plug-in piece (32) is supported on the injector holder (17) resiliently in the axial direction with regard to a longitudinal axis of the plug-in piece (32).

7. Cylinder head according to Claim 6,
**characterized in that** the plug-in piece (32) is in contact at a first end with the injector holder (17) and at an opposite second end with the tubular spring element (40).

8. Cylinder head according to one of Claims 1 to 7,
**characterized in that** the injector holder (17) has a plug-in piece receptacle (31), in which the plug-in piece (32) is seated.

9. Cylinder head according to one of Claims 1 to 8,
**characterized in that** the cylinder head assembly has a plug-in piece receptacle (42), in which the plug-in piece (32) is seated.

10. Cylinder head according to one of Claims 1 to 9,
**characterized in that** the injector holder (17) comprises a pressure accumulator (20) which can be connected fluidically to a fuel source and is connected fluidically to the injector (22).

11. Cylinder head according to one of Claims 1 to 9,
**characterized**
**in that** the injector holder (17) comprises a plurality of injector receiving bores (19), in each of which an injector (22) is received, and
**in that** the injector holder (17) comprises a pressure accumulator (20) which can be connected fluidically to a fuel source and is connected fluidically to the injectors.

12. Cylinder head according to Claim 11,
**characterized in that** the pressure accumulator (20) extends as a cylindrical buffer bore (20) through the injector holder (17), wherein, in particular, the buffer bore (20) is closed at at least one end by way of a sealing element (21, 21').

13. Cylinder head according to one of Claims 1 to 12,
**characterized in that** the fuel inlet aperture (13) opens into the suction duct (12) via a small tubular injection tube (14).

14. Cylinder head according to Claim 13,
**characterized in that** the small injection tube (14) is connected to the cylinder head assembly, in particular by being screwed in, adhesively bonded or pressed in.

15. Cylinder head according to one of Claims 1 to 15,
**characterized in that** the cylinder head assembly comprises a main element (2) and an intake manifold (3), wherein the suction duct (12) is formed at least partially by the main element (2) and the intake manifold (3).

## Revendications

1. Culasse pour un moteur à combustion interne, en particulier pour un moteur à combustion interne fonctionnant à l'hydrogène, comprenant :
un agencement de culasse qui présente un canal d'aspiration (12) et une ouverture d'admission de carburant (13), l'ouverture d'admission de carburant (13) débouchant dans le canal d'aspiration (12),
un porte-injecteur (17), qui est relié de manière amovible à l'agencement de culasse et présente d'un alésage de réception d'injecteur (19),
un injecteur (22) qui est reçu dans l'alésage de réception d'injecteur (19) et qui est serré par rapport au porte-injecteur (17) au moyen de moyens de serrage (24),
**caractérisée par**
une pièce d'enfichage tubulaire (32), qui est disposée entre le porte-injecteur (17) et l'agencement de culasse de telle sorte qu'une ouverture de sortie (29) de l'injecteur (22) et l'ouverture d'admission de carburant (13) de l'agencement de culasse sont reliées fluidiquement l'une à l'autre via la pièce d'enfichage (32).

2. Culasse selon la revendication 1,
**caractérisée en ce que** le porte-injecteur (17) présente une ouverture de transfert de carburant (30), l'alésage de réception d'injecteur (19) débouchant dans l'ouverture de transfert de carburant (30).

3. Culasse selon la revendication 2,
**caractérisée en ce que** la pièce d'enfichage tubulaire (32) est disposée entre le porte-injecteur (17) et l'agencement de culasse de telle sorte que l'ouverture de sortie (29) de l'injecteur (22) et l'ouverture d'admission de carburant (13) de l'agencement de culasse sont reliées fluidiquement l'une à l'autre via l'ouverture de transfert de carburant (30) et la pièce d'enfichage (32).

4. Culasse selon l'une quelconque des revendications 1 à 3,
**caractérisée en ce qu'**un élément ressort tubulaire (40) est prévu, lequel est disposé entre le porte-injecteur (17) et la pièce d'enfichage (32) de telle sorte que la pièce d'efichage (32) est soutenue élastiquement sur le porte-injecteur (17) dans une direction axiale par rapport à un axe longitudinal de la pièce d'enfichage (32).

5. Culasse selon la revendication 4,
**caractérisée en ce que** la pièce d'enfichage (32) est en appui, à une première extrémité (34), avec l'agencement de culasse et, à une deuxième extrémité (35) opposée, avec l'élément ressort tubulaire (40).

6. Culasse selon l'une quelconque des revendications 1 à 3,
**caractérisée en ce qu'**un élément ressort tubulaire (40) est prévu, lequel est disposé entre la pièce d'enfichage (32) et l'agencement de culasse, de telle sorte que la pièce d'enfichage (32) est soutenue élastiquement sur le porte-injecteur (17) dans une direction axiale par rapport à un axe longitudinal de la pièce d'enfichage (32).

7. Culasse selon la revendication 6,
**caractérisée en ce que** la pièce d'enfichage (32) est en appui, à une première extrémité, avec le porte-injecteur (17) et, à une deuxième extrémité opposée, avec l'élément ressort tubulaire (40).

8. Culasse selon l'une quelconque des revendications 1 à 7,
**caractérisée en ce que** le porte-injecteur (17) présente un logement de pièce d'enfichage (31), dans lequel la pièce d'enfichage (32) repose.

9. Culasse selon l'une quelconque des revendications 1 à 8,
**caractérisée en ce que** l'agencement de culasse présente un logement de pièce d'enfichage (42), dans lequel la pièce d'enfichage (32) repose.

10. Culasse selon l'une quelconque des revendications 1 à 9,
**caractérisée en ce que** le porte-injecteur (17) comprend un accumulateur de pression (20), qui peut être relié fluidiquement à une source de carburant et qui est relié fluidiquement à l'injecteur (22).

11. Culasse selon l'une quelconque des revendications 1 à 9,
**caractérisée**
**en ce que** le porte-injecteur (17) comprend plusieurs alésages de réception d'injecteur (19), dans lesquels un injecteur (22) est respectivement reçu, et
**en ce que** le porte-injecteur (17) comprend un accumulateur de pression (20), qui peut être relié fluidiquement à une source de carburant et qui est relié fluidiquement respectivement aux injecteurs.

12. Culasse selon la revendication 11,
**caractérisée en ce que** l'accumulateur de pression (20) s'étend sous la forme d'un alésage tampon cylindrique (20) à travers le porte-injecteur (17), l'alésage tampon (20) étant en particulier fermé à au moins une extrémité par un élément de fermeture (21, 21').

13. Culasse selon l'une quelconque des revendications 1 à 12,
**caractérisée en ce que** l'ouverture d'admission de carburant (13) s'ouvre dans le canal d'aspiration (12) via un tube d'injection tubulaire (14).

14. Culasse selon la revendication 13,
**caractérisée en ce que** le tube d'injection (14) est relié à l'agencement de culasse, en particulier par vissage, collage ou emmanchement par pressage.

15. Culasse selon l'une quelconque des revendications 1 à 15,
**caractérisée en ce que** l'agencement de culasse comprend un élément de base (2) et un tube d'aspiration (3), le canal d'aspiration (12) étant formé au moins partiellement par l'élément de base (2) et le tube d'aspiration (3).
